(19) Europäisches Patentamt
European Patent Office
Office européen des brevets

(11) **EP 1 504 336 B1**

(12) **EUROPÄISCHE PATENTSCHRIFT**

(45) Veröffentlichungstag und Bekanntmachung des Hinweises auf die Patenterteilung:
**25.06.2008 Patentblatt 2008/26**

(21) Anmeldenummer: **03747417.8**

(22) Anmeldetag: **24.04.2003**

(51) Int Cl.:
**G06F 7/58** (2006.01)

(86) Internationale Anmeldenummer:
**PCT/EP2003/004285**

(87) Internationale Veröffentlichungsnummer:
**WO 2003/093971 (13.11.2003 Gazette 2003/46)**

(54) **VORRICHTUNG UND VERFAHREN ZUM ERZEUGEN EINER ZUFALLSZAHL**

DEVICE AND METHOD FOR GENERATING A RANDOM NUMBER

PROCEDE ET APPAREIL DE PRODUCTION D'UN NOMBRE ALEATOIRE

(84) Benannte Vertragsstaaten:
**DE FR**

(30) Priorität: **29.04.2002 DE 10219135**

(43) Veröffentlichungstag der Anmeldung:
**09.02.2005 Patentblatt 2005/06**

(73) Patentinhaber: **Infineon Technologies AG**
**81669 München (DE)**

(72) Erfinder:
• **MEINTRUP, David**
**80538 München (DE)**
• **STROMBERG, Guido**
**80469 München (DE)**
• **STURM, Thomas**
**85551 Kirchheim (DE)**
• **STOEHR, Annelie**
**80804 München (DE)**

(74) Vertreter: **Zinkler, Franz et al**
**Patentanwälte Schoppe, Zimmermann,**
**Stöckeler & Zinkler,**
**Postfach 246**
**82043 Pullach bei München (DE)**

(56) Entgegenhaltungen:
EP-A- 0 903 665          EP-A- 0 981 081
EP-A- 1 197 846          US-A- 4 513 386
US-A- 4 853 884

• DATABASE [Online] 16 Januar 1998
VELDHUIZEN T.: 'Noise models' Retrieved from
HTTP://HOMEPAGES.INF.ED.AC.UK/RBF/
CVONLINE/ LOCAL_COPIES/VELDHUIZEN/
NODE11.HTML

**Beschreibung**

Die vorliegende Erfindung bezieht sich auf Vorrichtungen und Verfahren zum Erzeugen einer Zufallszahl, wie sie beispielsweise in kryptographischen Anwendungen benötigt werden, wie z.B. in SmartCards.

Zufallszahlen werden in verschiedenen Anwendungsfeldern benötigt. Beispielhaft seien Simulation, Tests und kryptographische Anwendungen genannt. Gerade für letztere scheidet aus Sicherheitsgründen die Verwendung von sogenannten Pseudo-Zufallszahlen aus. Daher werden oft physikalische Zufallszahlengeneratoren verwendet. Diese basieren in der Regel auf dem stochastischen Rauschen eines physikalischen Systems. Hierbei stellen sich vor allem Probleme dahingehend, daß aus einem zufälligen physikalischen Signal möglichst schnell eine gleichverteilte Folge von Nullen und Einsen erzeugt werden soll, und daß sich die statistischen Eigenschaften eines Signals, insbesondere die Wahrscheinlichkeitsdichtefunktion, mit der Zeit durch äußere Einflüsse wie Temperatur oder Druck ändern.

Zufallszahlengeneratoren sind aus "High Quality Physical Random Number Generator", Markus Dichtl und Norbert Janssen, Proceedings of Eurosmart Security Conference, Juni 2000, Marseille, Frankreich, Seiten 279 bis 287, bekannt. Ein bekannter Zufallszahlengenerator umfaßt einen Oszillator, ein dem Oszillator nachgeschaltetes D-Flip-Flop und am Ausgang des D-Flip-Flops einen Schalter, der von einem Oszillator mit Phasenjitter gesteuert wird. Der Oszillator mit Phasenjitter, der den Schalter am Ausgang des D-Flip-Flops steuert, hat dann, wenn die Frequenz des Oszillators in einem bestimmten Verhältnis zur Frequenz des Oszillators mit Phasenjitter gewählt wird, einen Zustand, der vom vorherigen Zustand unabhängig ist, so daß ein qualitativ hochwertiges Rauschsignal erzeugt wird. Pro Schalterbetätigung wird ein Zufallsbit erzeugt, das einer Nachverarbeitung und Kompression unterzogen werden kann. Als Nachverarbeitung kann ein Schieberegister mit linearer Kopplung eingesetzt werden.

Ein weiterer Zufallszahlengenerator ist beispielsweise in der EP 0 903 665 A2 offenbart. Weitere Informationen finden sich auch in der Dissertation der Technischen Universität Berlin von R. Brederlow mit dem Titel "Niederfrequentes Rauschen in einer analogen CMOS-Schaltung", aus dem Jahr 1999.

Aufgrund unterschiedlicher Hardwareimplementierungen sind die in dem Stand der Technik bekannten Zufallszahlengeneratoren unterschiedlich schnell. Alle haben jedoch gemeinsam, daß eine Abtastung eines Zufallsprozesses lediglich ein Bit eines Zufallszahlen-Strings erzeugt, aus dem dann unter Verwendung irgendeiner Nachbearbeitung eine Zufallszahl mit einer bestimmten Breite, z.B. 8 Bits, erzeugt wird.

Oftmals werden Zufallszahlen schnell benötigt. Um dies zu erreichen, müssen Abtastschaltungen, Rauschquelle und Steueroszillatoren für die Abtastschaltungen als schnelle Bauelemente ausgeführt sein, was in einem Kostenanstieg des Zufallszahlengenerators und auch in einer Zunahme an Platzbedarf auf einem Chip resultieren kann. Dies ist dahingehend nachteilhaft, da der Bedarf an Chipfläche typischerweise problematisch ist, zumal bei typischen kryptographischen Anwendungen beispielsweise auf Smart Cards eine begrenzte maximale Chipfläche gegeben ist, die der Schaltungsentwickler ausnutzen darf. Auf dieser Chipfläche soll nicht nur der Zufallszahlengenerator, sondern eine CPU, möglicherweise Koprozessoren und insbesondere auch der Speicher untergebracht werden. Generell wird eine große Menge an Speicher bevorzugt, was dazu führt, daß die anderen Komponenten so klein als möglich gemacht werden müssen. Hochgeschwindigkeits-Implementationen für den Zufallszahlengenerator verbieten sich daher aufgrund des hohen Platzbedarfs und nicht zuletzt auch aufgrund des hohen Stromverbrauchs. Der Stromverbrauch fällt insbesondere dann ins Gewicht, wenn Kontaktlos-Anwendungen betrachtet werden, d.h. SmartCards, die keine eigene Spannungsversorgung haben, sondern von einem HF-Feld, das z.B. von einem Terminal ausgesendet wird, mit Leistung versorgt werden. Es ist unmittelbar einsichtig, daß hier neben der Chipfläche auch der Leistungsverbrauch einer Schaltung von großem Interesse ist.

Das US-Patent Nr. 4,853,884 offenbart einen Zufallszahlengenerator mit digitaler Rückkopplung. Der Zufallszahlengenerator umfasst eine Zener-Diode, die ein physikalisches Rauschsignal liefert. Eine Mikroprozessor-Rückkopplungsschaltung überwacht die Zufallszahlenausgabe und erzeugt ein Eingangssteuersignal ansprechend auf eine Differenz zwischen dem Grad der Zufälligkeit des Ausgangssignals und dem einer vorbestimmten statistischen Verteilung. Zu diesem Zweck stellt die digitale Rückkopplung automatisch den Biasing-Punkt der Zener-Diode nach.

Die EP 0 903 665 A2 offenbart einen physikalischen Zufallszahlengenerator mit einer Rauschquelle, die mit einem Wechselsignal-Kopplungsverstärker gekoppelt ist, wobei ein Ausgangssignal des Verstärkers einem A/D-Wandler zugeführt wird. Der A/D-Wandler hat eine 2-Bit-Genauigkeit, wobei die Signalform mit dem verstärkten Rauschsignal zu bestimmten Zeitintervallen in Digitalwerte umgewandelt wird.

Die EP 1197846 A2 offenbart zwei Rauscherzeugungsschaltungen, wobei jeder Rauscherzeugungsschaltung ein Hochpassfilter nachgeschaltet ist. Die Ausgangssignale der beiden Hochpassgefilterten Rauschsignale werden einer Differenzschaltung zugeführt, die ein Ausgangssignal zu einem A/D-Wandler liefert, der eine Berechnungsschaltung versorgt, die schließlich eine Zufallszahl ausgibt. Insbesondere wird ein Betrag eines Digitalsignals, das von dem Analog/Digital-Wandler geliefert wird, mit einem Schwellenpegel verglichen, und es wird eine 1 erzeugt, wenn das digitale Signal nicht kleiner als der Schwellenpegel ist, und es wird eine Null erzeugt, wenn das digitale Signal kleiner als der Schwellenpegel ist. Dann werden die Auftrittshäufigkeiten für ein Bit mit dem Wert "1" und ein Bit mit dem Wert "0" über eine vorbestimmte Zeitdauer berechnet, um dann, wenn unterschiedliche Auftrittshäufigkeiten stattfinden, den Schwellenpegel zu erhöhen oder zu erniedrigen.

Die Aufgabe der vorliegenden Erfindung besteht darin, eine effizientere Vorrichtung oder ein effizienteres Verfahren zum Erzeugen einer codierten Zufallszahl zu schaffen.

Diese Aufgabe wird durch eine Vorrichtung zum Erzeugen einer codierten Zufallszahl nach Patentanspruch 1 oder durch ein Verfahren zum Erzeugen einer codierten Zufallszahl nach Patentanspruch 5 gelöst.

Der vorliegenden Erfindung liegt die Erkenntnis zugrunde, daß aus einer Abtastung eines Rauschsignals eine codierte Zufallszahl mit n Stellen erzeugt werden kann, indem die stochastischen Eigenschaften des Zufallsprozesses ausgenutzt werden. Dies wird dadurch möglich, daß der Definitionsbereich der Wahrscheinlichkeitsdichtefunktion eines Zufallsprozesses, wie z.B. das Schrotrauschen einer Diode oder ein thermisch rauschender ohmscher widerstand oder ein mit einem Rauschsignal angesteuerter steuerbarer Oszillator, in Bereiche gleicher Wahrscheinlichkeit aufgeteilt wird, um dann je nachdem, ob ein Rauschsignalabtastwert in einem der mehreren Bereiche liegt, eine oder mehrere Stellen einer Zufallszahl mit $(2^n-1)$ Stellen zu belegen.

Die $(2^n-1)$ Stellen der Zufallszahl sind voneinander abhängig und somit im binären Fall keine Zufallsbits. Die Zahlen, die durch die unabhängigen Stellen der codierten Zufallszahl definiert werden, sind jedoch Zufallszahlen mit maximaler Information.

In Anwendungen, bei denen voneinander unabhängige "Stellen" der codierten Zufallszahl benötigt werden, also echte Zufallsbits im informationstheoretischen Sinn, muß jedoch der Definitionsbereich der Wahrscheinlichkeitsdichtefunktion in wenigstens 4 Bereiche (oder 8, 16, 32, ... Bereiche) aufgeteilt werden, um eine codierte Zufallszahl mit voneinander unabhängigen Zufallsbits im informationstheoretischen Sinn zu erzeugen.

Wird die Wahrscheinlichkeitsdichtefunktion in eine größere Anzahl von Bereichen gleicher Wahrscheinlichkeit eingeteilt, so kann eine Zufallszahl mit einer erheblich größeren Menge an Stellen pro Rauschsignalabtastung erzeugt werden, wobei die Anzahl von abhängigen Stellen immer größer als die Anzahl der unabhängigen Stellen sein wird.

Dadurch, daß aus einem Rauschsignal-Abtastvorgang eine codierte Zufallszahl mit n Stellen erzeugt wird, kann die Geschwindigkeit des Rauschsignalgenerators im Vergleich zu einem bekannten Rauschsignalgenerator, bei dem pro Rauschsignal-Abtastvorgang lediglich ein Bit erzeugt wird, verdoppelt bzw. vervielfacht werden.

Damit die erzeugten Zufallszahlen tatsächlich gleichverteilt sind, wird es bevorzugt, daß die Rauschsignal-Schwellenwerte so eingestellt werden, daß die Wahrscheinlichkeiten, daß ein Rauschsignal-Abtastwert zwischen zwei benachbarten Rauschsignal-Schwellenwerten liegt, für verschiedene Schwellenwerte kleiner als ein vorbestimmter Differenzwert voneinander unterschiedlich sind und vorzugsweise gleich sind.

Hierzu wird bei einem bevorzugten Ausführungsbeispiel der vorliegenden Erfindung eine abschnittsweise oder dauernde Adaption der Rauschsignal-Schwellenwerte vorgenommen, um Temperatur-Druck- bzw. sonstige Umgebungsschwankungen der gesamten Schaltungen und insbesondere der Rauschsignalquelle kompensieren zu können.

Erfindungsgemäß wird die Zufallszahl mit den abhängigen Stellen unter Verwendung eines Codierers codiert bzw. nachverarbeitet, um die codierte Zufallszahl zu erzeugen, die - voneinander unabhängige - Zufallsbits im informationstheoretischen Sinn hat. Durch Entziehung der Redundanz aus der Zufallszahl mit den abhängigen Stellen werden die codierten Zufallszahlen erzeugt, deren Stellen voneinander unabhängig sind.

In anderen Worten wird die Codierung durchgeführt, um nicht nur hinsichtlich der insgesamten Zufallszahl an sich eine Gleichverteilung zu erreichen, sondern um auch hinsichtlich der einzelnen Stellen der Zufallszahl eine statistische Gleichverteilung zu erzeugen.

Bevorzugte Ausführungsbeispiele der vorliegenden Erfindung werden nachfolgend bezugnehmend auf die beiliegenden Zeichnungen detailliert erläutert. Es zeigen:

Fig.1 ein Prinzipblockschaltbild einer Vorrichtung zum Erzeugen einer Zufallszahl;

Fig. 2a eine beispielhafte Wahrscheinlichkeitsdichtefunktion eines Rauschsignals;

Fig. 2b eine Darstellung der Aufteilung des Wertebereichs der Wahrscheinlichkeitsdichtefunktion von Fig. 2a in Bereiche mit gleicher Wahrscheinlichkeit;

Fig. 3 eine Vorrichtung zum Erzeugen einer Zufallszahl gemäß einem ersten Ausführungsbeispiel der vorliegenden Erfindung mit einer Wahrheitstabelle für die Codierer-Logik;

Fig. 4 eine Vorrichtung zum Erzeugen einer Zufallszahl gemäß einem weiteren Ausführungsbeispiel der vorliegenden Erfindung mit Nachführung der Rauschsignal-Schwellenwerte;

Fig. 5 eine Vorrichtung zum Erzeugen einer Zufallszahl gemäß einem weiteren Ausführungsbeispiel der vorliegenden Erfindung mit einer adaptiven Nachführung der Rauschsignal-Schwellenwerte;

Fig. 6     ein weiteres Ausführungsbeispiel der vorliegenden Erfindung mit einer adaptiven Nachführung der Rauschsignal-Schwellenwerte gemäß einem weiteren Ausführungsbeispiel der vorliegenden Erfindung;

Fig. 7     eine Vorrichtung zum Erzeugen einer Zufallszahl mit einer adaptiven Nachführung der Rauschsignal-Schwellenwerte gemäß einem weiteren Ausführungsbeispiel der vorliegenden Erfindung;

Fig. 8     eine beispielhafte Implementation für die Einrichtung zum Bereitstellen der Rauschsignal-Schwellenwerte mit adaptiver Anpassung; und

Fig. 9     eine alternative Implementation der Einrichtung zum Bereitstellen der Rauschsignal-Schwellenwerte mit adaptiver Nachführung.

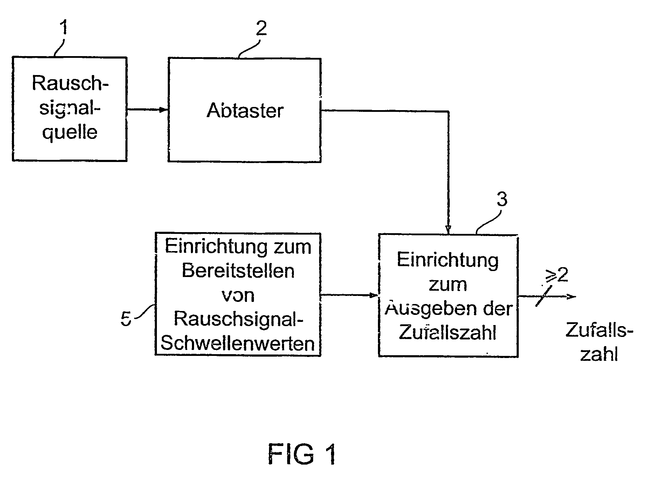

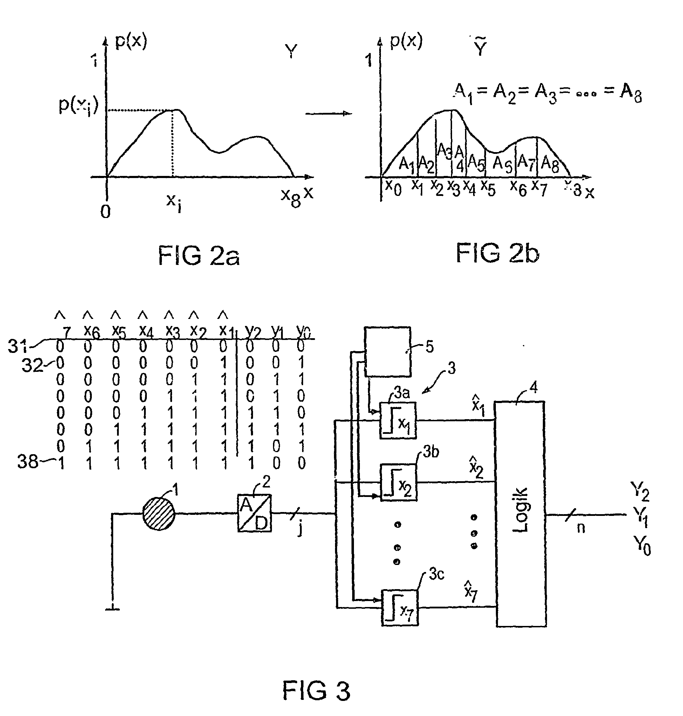

Fig. 1 zeigt eine Rauschsignalquelle 1 mit einer bestimmten Wahrscheinlichkeitsdichtefunktion p(x), auf die bezugnehmend auf die Figuren 2a und 2b näher eingegangen wird. Ein Rauschsignal, das von der Rauschsignalquelle 1 ausgegeben wird, wird in einen Abtaster 2 eingespeist, der typischerweise eine Abtasten- und Halten-Schaltung ("Sample And Hold") und einen nachgeschalteten Quantisierer aufweist, um am Ausgang des Abtasters 2 einen digitalen quantisierten Wert zu einer Einrichtung 3 zum Ausgeben einer Zufallszahl zu liefern. Die Einrichtung 3 wird ferner von einer Einrichtung 5 zum Bereitstellen von Rauschsignal-Schwellenwerten angesteuert. Die Einrichtung 5 zum Bereitstellen von Rauschsignal-Schwellenwerten ist ausgebildet, um zumindest drei Rauschsignal-Schwellenwerte zu liefern, wobei die zumindest drei Rauschsignal-Schwellenwerte so gewählt sind, daß eine erste Wahrscheinlichkeit, daß ein vom Abtaster 2 gelieferter Rauschsignal-Abtastwert zwischen dem ersten und dem zweiten Rauschsignal-Schwellenwert liegt, und daß eine zweite Wahrscheinlichkeit, daß der Rauschsignal-Abtastwert zwischen dem zweiten und dem dritten Rauschsignal-Schwellenwert liegt, sich weniger als einen vorbestimmten Differenzwert unterscheiden oder gleich sind.
Die Einrichtung zum Ausgeben der Zufallszahl mit ($2^n$-1) Stellen in Abhängigkeit von dem Rauschsignal-Abtastwert ist ausgebildet, um dann, falls ein Rauschsignal-Abtastwert zwischen dem ersten und dem zweiten Rauschsignal-Schwellenwert liegt, eine erste Stelle der Zufallszahl mit einem logischen Zustand zu belegen, der sich von einem logischen Zustand unterscheidet, mit dem eine zweite Stelle der Zufallszahl belegt wird, wenn der Rauschsignal-Abtastwert zwischen dem zweiten und dem dritten Rauschsignal-Schwellenwert liegt. Bei Verwendung von drei Rauschsignal-Schwellenwerten ergeben sich somit zwei Bereiche, in denen der Rauschsignal-Abtastwert liegen kann, nämlich ein erster Bereich zwischen dem ersten Rauschsignal-Schwellenwert und dem zweiten Rauschsignal-Schwellenwert und ein zweiter Bereich zwischen dem zweiten Rauschsignal-Schwellenwert und dem dritten Rauschsignal-Schwellenwert. Liegt der Rauschsignal-Abtastwert in dem ersten Bereich, so wird eine erste Stelle der Zufallszahl z.B. mit einer logischen "1" belegt, und wird eine zweite - von der ersten Stelle abhängige Stelle der Zufallszahl mit einer logischen "0" belegt, da der Rauschsignal-Abtastwert nicht in dem zweiten Bereich liegt, für den die zweite Stelle der Zufallszahl steht. Jeder Abtastvorgang, der durch den Abtaster 2 mit dem von der Rauschsignalquelle 1 ausgegebenen Rauschsignal durchgeführt wird, führt somit zu einer 2-Bit-Zufallszahl, wobei beide Bits der Zufallszahl jedoch aufgrund der enthaltenen Redundanz voneinander abhängig sind.
Im nachfolgenden wird bezugnehmend auf die Figuren 2a und 2b auf die Natur der Rauschsignalquelle 1 von Fig. 1 eingegangen. Ausgegangen wird davon, daß die Rauschsignalquelle ein stochastisches Signal Y mit einer kontinuierlichen Dichtefunktion p(x) liefert. Die Dichtefunktion p(x) wird nun erfindungsgemäß in zumindest $2^n$ Intervalle oder Bereiche unterteilt, wobei n eine ganze Zahl ist und größer oder gleich 1 ist. Für n = 1 können Zufallszahlen mit zwei oder mehr Stellen erhalten werden, wobei die Stellen jedoch voneinander abhängig sind.
Für vier oder mehr Bereiche, also n = 2, 3, 4, ..., können codiert Zufallszahlen mit voneinander unabhängigen Stellen erzeugt werden, wobei jeder Bitkombination der unabhängigen Stellen genau ein Bereich zugeordnet ist. Für 4 Bereiche hat die Zufallszahl somit 2 echte Zufallsbits. Für 8 Bereiche können dann 3 echte Zufallsbits pro Abtastung erhalten werden. Für 16 Bereiche können 4 echte Zufallsbits pro Abtastung erhalten werden, usw.
Diese Unterteilung findet derart statt, daß die von den Unterteilungspunkten $x_i$ eingeschlossenen Flächen unter dem Graphen p(x) gleich groß sind. Eine solche Aufteilung für die beispielhafte Wahrscheinlichkeitsdichtefunktion p(x) von Fig. 2a ist in Fig. 2b gezeigt. Die Flächen unter der Wahrscheinlichkeitsdichtefunktion p(x) zwischen zwei benach-barten Rauschsignal-Schwellenwerten $x_i$ und $x_{i+1}$ sind vorzugsweise identisch, d.h. $A_i = A_{i+1}$ für alle i. Die Flächen unter der Wahrscheinlichkeitsdichtefunktion p(x) zwischen zwei Rauschsignal-Schwellenwerten wird durch Integrieren der Wahrscheinlichkeitsdichtefunktion p(x) von einem Rauschsignal-Schwellenwert $x_i$ zum benachbarten Rauschsignal-Schwellenwert $x_{i+1}$ erhalten. Die Rauschsignal-Schwellenwerte sind somit derart zu bestimmen, daß die Flächengleichheit der Bereiche, die von zwei benachbarten Rauschsignal-Schwellenwerten eihgeschlossen wird, gegeben ist. Die Untexteilungspurlkte bzw. Rauschsignal-Schwellenwerte werden auch als ($i/2^n$)-Quantile bezeichnet. Definiert man nun eine Zufallsvariable $\widehat{Y}$, indem man jedem Intervall zwischen zwei Unterteilungspunkten $x_i$ und $x_i$ + 1 eine Zahl i zuordnet, so erhält man eine Gleichverteilung auf {$0,...2^{n-1}$}. Dies sieht gleichungsmäßig folgendermaßen aus:

$$P(\tilde{Y} = i) = P(x_i \leq Y \leq x_{i+1}) = \frac{1}{2^n} \quad \text{für alle } i \in \{0,\ldots,2^n - 1\} \tag{1}$$

Mit Hilfe dieses Verfahrens erhält man aus jedem Signal eine Realisierung auf der diskreten Menge $\{0,\ldots 2^{n-1}\}$. Da diese aber eine n Bit lange Binärdarstellung besitzt, liefert jede einzelne Messung n Bits. Somit ist die Methode n-mal schneller als eine direkte Erzeugung von Bits.

Weiterhin sei angemerkt, daß es keine theoretische Grenze für die Größe der Zahl n gibt. Sie wird in der Praxis durch Meßgenauigkeit, Aufwand und Auflösung des physikalischen Systems begrenzt. Darüber hinaus funktioniert das erfindungsgemäße Konzept für jedes kontinuierliche stochastische Signal unabhängig von der Gestalt der zugehörigen Dichtefunktion.

Ein Vorteil der vorliegenden Erfindung besteht darin, daß die Erzeugung der Bits um den Faktor n schneller als eine bitweise Erzeugung ist. Für n gibt es keine theoretische Grenze.

Ein weiterer Vorteil der vorliegenden Erfindung besteht darin, daß das Verfahren unabhängig von der konkreten Gestalt der Dichtefunktion des stochastischen Signals anwendbar ist.

Ein weiterer Vorteil der vorliegenden Erfindung besteht darin, daß die benötigten Unterteilungspunkte bzw. Rauschsignal-Schwellenwerte entweder a priori bestimmt werden, d.h. von der Einrichtung zum Bereitstellen von Rauschsignal-Schwellenwerten bereitgestellt werden, oder mit Hilfe adaptiver Verfahren an zeitliche Schwankungen der Verteilungsfunktion angepaßt werden können.

Die Rauschsignalquelle kann eine der oben ausgeführten Formen oder irgendeine Form sein, die ein stochastisches Signal mit einer Wahrscheinlichkeitsdichtefunktion liefert. Der Abtaster kann einen beliebigen Aufbau haben, solange er ausgangsseitig ein Signal mit einer solchen Genauigkeit liefert, daß entschieden werden kann, ob der Rauschsignal-Abtastwert, d.h. ein Ausgangswert der Rauschsignalquelle zu einem beliebigen Abtastzeitpunkt, zwischen zwei Rauschsignal-Schwellenwerten liegt oder nicht.

Wie es bereits ausgeführt worden ist, reichen bereits drei Rauschsignal-Schwellenwerte aus, um aus einem Rauschsignal-Abtastvorgang eine 2-Bit-Zufallszahl (mit voneinander abhängigen Stellen) zu erzeugen. Am Beispiel der Fig. 2b wäre der erste Rauschsignal-Abtastwert der Wert $x_0$, wäre der zweite Rauschsignal-Abtastwert der Wert $x_4$ und wäre der dritte Rauschsignal-Abtastwert der Wert $x_8$. Alternativ können auch drei benachbarte Rauschsignal-Schwellenwerte verwendet werden, die nicht den Anfangspunkt $x_0$ oder den Endpunkt $x_8$ umfassen, wie z.B. die drei Rauschsignal-Schwellenwerte $x_2$, $x_3$ und $x_4$, wobei jedoch hier nur Rauschsignal-Abtastwerte zu Zufallszahlen führen, die zwischen $x_2$ und $x_4$ liegen. Wieder alternativ können auch Bereiche verwendet werden, die nicht zusammenhängend sind, so daß ein ungültiger Bereich existiert, der zu einem gültigen Bereich benachbart ist. Fällt ein Abtastwert in einen solchen ungültigen Bereich, so wird für diesen Abtastwert keine Zufallszahl ausgegeben. Ein ungültiger Bereich könnte beispielsweise dazu verwendet werden, eine problematische Stelle in der Wahrscheinlichkeitsdichtefunktion einer physikalischen Rauschquelle "auszublenden".

Es sei darauf hingewiesen, daß bei der Verwendung von drei Rauschsignal-Schwellenwerten die Information dahingehend, ob der Rauschsignal-Abtastwert in dem einen Bereich, d.h. zwischen den unteren beiden Rauschsignal-Schwellenwerten ist, oder in dem anderen Bereich, also zwischen den oberen Rauschsignal-Schwellenwerten ist, erfaßt wird. Die zwei Stellen sind zwar voneinander abhängig aufgrund der Redundanz in der 2-Bit-Zufallszahl. Dennoch hat eine Folge solcher z. B. 2-Bit-Zufallszahlen eine stochastische Verteilung.

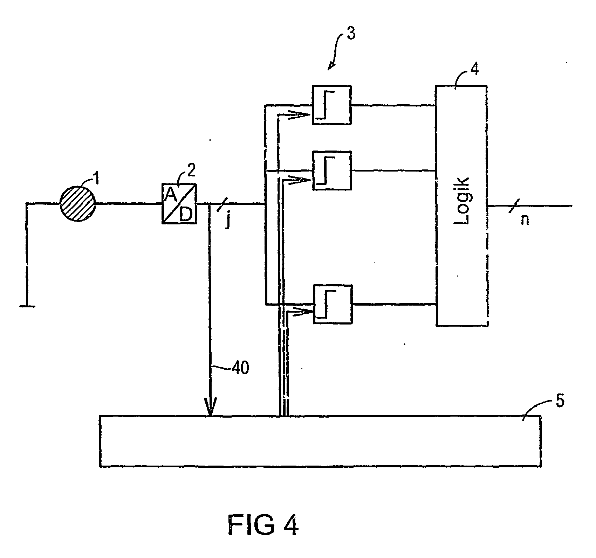

Bei einem bevorzugten Ausführungsbeispiel der vorliegenden Erfindung wird es bevorzugt, mit mehr als drei Rauschsignal-Schwellenwerten zu arbeiten. Hierzu wird auf Fig. 3 Bezug genommen. Fig. 3 zeigt eine detailliertere Implementation der Einrichtung 3 zum Ausgeben einer Zufallszahl. Die Einrichtung 3 zum Ausgeben einer Zufallszahl umfaßt verschiedene Schwellwertentscheider 3a, 3b, 3c, die bei dem in Fig. 3 gezeigten bevorzugten Ausführungsbeispiel den untersten Schwellenwert $x_0$ von Fig. 2b und den obersten Schwellenwert $x_8$ von Fig. 2b nicht umfassen, sondern lediglich die Schwellenwerte zwischen dem untersten und dem obersten Schwellenwert. Die Schwellwertentscheider sind ausgebildet, um ein logisch hohes Signal, wie z.B. ein "1"-Bit auszugeben, wenn ein von dem A/D-Wandler 2 gelieferter Rauschsignal-Abtastwert größer als die Schwelle ist, und um eine logische "0" auszugeben, wenn der Rauschsignal-Abtastwert kleiner als der Rauschsignal-Schwellenwert ist, der von der Einrichtung 5 entweder fest eingespeichert bereitgestellt wird, oder, wie es bezugnehmend auf die Figuren 4, 5, 6 und 7 erläutert wird, adaptiv bereitgestellt wird.

Ist ein Rauschsignal-Abtastwert beispielsweise in dem Bereich zwischen $x_0$ von Fig. 2b und $x_1$ von Fig. 2b, so werden alle Schwellwertgatter eine logische "0" ausgeben, da der Rauschsignal-Abtastwert keines der Schwellwertgatter von Fig. 3 "auslöst", was mit anderen Worten bedeutet, daß der Rauschsignal-Abtastwert keinen der Rauschsignal-Schwellenwerte überschreitet. Dieser Fall entspricht einer ersten Zeile 31 der in Fig. 3 dargestellten Wahrheitstabelle für eine Codierlogik 4 auf die nachfolgend eingegangen wird. Liegt der Rauschsignal-Abtastwert vom A/D-Wandler 2 dagegen zwischen dem Rauschsignal-Schwellenwert $x_1$ und dem Rauschsignal-Schwellenwert $x_2$, so wird das erste Gatter 3a eine logische "1" ausgeben, während all die anderen Gatter eine logische "0" ausgeben werden. Dies entspricht der zweiten Zeile 32 der Wahrheitstabelle von Fig. 3. Liegt der Rauschsignal-Abtastwert dagegen oberhalb des höchsten Rauschsignal-Schwellenwerts $x_7$, so würde dies der achten Zeile 38 der Wahrheitstabelle entsprechen, bei der sämtliche Schwellwertgatter 3a, 3b und 3c eine logische "1" ausgeben.

In dem linken Bereich der Wahrheitstabelle, also in der Schaltung von Fig. 3 nach den Schwellwertentscheidern, befinden sich Zufallszahlen mit voneinander abhängigen Stellen, während im rechten Bereich codierte Zufallszahlen mit voneinander unabhängigen n Stellen zu finden sind, die echte Zufallsbits im infomationstheoretischen Sinn sind. Diese echten Zufallsbits können verwendet werden, um unter Verwendung vieler Rauschsignal-Abtastwerte beispielsweise eine 512-Bit-Zufallszahl zu erzeugen, die bei der Schlüsselerzeugung des z.B. RSA-Algorithmus benötigt wird. Hierzu wären bei 32 Bereichen (also fünf Zufallsbits pro Abtastung) lediglich 103 Abtastungen erforderlich, und zwar im Gegensatz von 512 Abtastungen, wenn pro Abtastung genau ein Zufallsbit erzeugt wird.

Es sei darauf hingewiesen, daß bei dem in Fig. 3 gezeigten Ausführungsbeispiel, um die Zufallszahlen zu erzeugen, Schwellwertgatter verwendet werden, die der Tatsache, ob ein Rauschsignal-Abtastwert oberhalb oder unterhalb des Schwellenwertes liegt, d.h. im ersten oder im zweiten Bereich liegt, lediglich ein Bit zuweisen. Um in so einem Fall, bei der Verwendung von Schwellwertgattern, eine Zufallszahl (vor der Codierung in Block 4) mit zumindest zwei - abhängigen - Stellen am Ausgang der Einrichtung 3 zu erzeugen, müssen zumindest zwei Schwellwertgatter verwendet werden, d.h. insgesamt vier Rauschsignal-Schwellenwerte, da zusätzlich der unterste Rauschsignal-Schwellenwert $x_0$ von Fig. 2b und der oberste Rauschsignal-Schwellenwert $x_8$ von Fig. 2b verwendet werden müßte. In diesem Fall, bei dem nur zwei Rauschsignal-Schwellenwerte $x_1$, $x_2$ verwendet werden, würde der Rauschsignal-Schwellenwert $x_1$ zwischen den Rauschsignal-Schwellenwerten $x_2$ und $x_3$ von Fig. 2b liegen, und würde der zweite Rauschsignal-Schwellenwert $x_2$ zwischen den Rauschsignal-Schwellenwerten $x_5$ und $x_6$ von Fig. 2b liegen, und zwar ebenfalls unter der vorgenannten Voraussetzung, daß die Flächen zwischen den Rauschsignal-Schwellenwerten und den entsprechenden Rand-Werten $x_0$ und $x_8$ gleich sind und ebenfalls gleich der Flächen zwischen den beiden Rauschsignal-Schwellenwerten, die die Gatter 3a, 3b bestimmen, sind. Zur Erzeugung von echten Zufallsbits würden dagegen mindestens drei Schwellwertgatter benötigt werden, die vier Bereiche in der Wahrscheinlichkeitsdichtefunktion voneinander unterscheiden können.

Die Rauschsignalquelle 1 von Fig. 3 erzeugt somit ein stochastisches Signal, wobei, wie es ausgeführt worden ist, ein elektronisches Bauelement, wie z.B. ein Widerstand oder ein Transistor eingesetzt werden kann.

Dieses analoge Signal wird mittels des A/D-Wandlers 2 in $2^j$ Stufen diskretisiert und dann, wie es ausgeführt worden ist, mit Hilfe der Schwellwertgatter verarbeitet. Aus praktischen Gründen werden, wie es ausgeführt worden ist, nur die inneren Schwellenwerte benutzt, d.h. die Schwellenwerte für die minimalen und die maximalen Amplituden werden nicht benötigt. Es sei darauf hingewiesen, daß die Funktionalität der Schwellenwerte mit dem A/D-Wandler 2 in einer einzigen Komponente integriert werden kann.

Abhängig von der Größe des abgetasteten Rauschwerts der Rauschquelle ergibt sich an den Ausgängen der Schwellwertgatter eine Zufallszahl, die ein $2^n$-1 dimensionaler binärer Vektor ist. Bei der vorliegenden Erfindung wird dieser redundante Vektor (linke Hälfte der Wahrheitstabelle in Fig. 3) codiert und auf einen n-dimensionalen Ausgangsvektor abgebildet. Hierzu wird eine Logikeinrichtung 4 verwendet, die prinzipiell als Codierer funktioniert. Die Logikeinrichtung 4 hat bei dem in Fig. 3 gezeigten bevorzugten Ausführungsbeispiel die in Fig. 3 dargestellte Wahrheitstabelle, um eine 7-Bit-Zufallszahl mit abhängigen Stellen in eine 3-Bit-codierte Zufallszahl mit echten Zufallsbits abzubilden bzw. umzucodieren. Am Ausgang der Logik 4 liegt somit ein Vektor von Zufallsbits an, der eine codierte Zufallszahl darstellt.

Zur Umsetzung der am Eingang der Logik 4 vorliegenden Zufallszahlen mit abhängigen Stellen wird es oftmals bevorzugt, die Redundanz-Entziehung durch den Codierer 4 zu bewirken, der in Fig. 2 und in den weiteren Figuren auch mit "Logik" bezeichnet ist, um die echten Zufallsbits zu erhalten.

Es sei darauf hingewiesen, daß die Funktion der Schwellwertgatter und die Funktion der Logikeinrichtung 4 auch in einem einzigen Bauteil zusammengefaßt werden kann.

Alternativ muß nicht unbedingt eine Schwellwertgatterentscheidung und nachfolgende Codierung vorgenommen werden. Die Zuordnung von zwei oder mehreren Zufallsbits zu einem Bereich kann erfindungsgemäß beliebig erfolgen, solange die n Bits der binären Zufallszahl derart bestimmt werden, daß jede Bitkombination der n Bits der binären Zufallszahl eindeutig einem der $2^n$ Bereiche zugeordnet ist.

Die logische Funktion, die durch den Codierer 4 implementiert werden muß, kann beispielsweise durch eine ROM-Tabelle dargestellt sein, die die Wahrheitstabelle von Fig. 3 aufweist. Werden die Schwellenwerte $x_i$ so gewählt, daß die $x_i$ den für die Gleichverteilung erforderlichen $(i/2^n)$-Quantilen entsprechen, ist die Zuordnung der $2^n$-1 binären Ausgänge der Schwellwertgatter zum n-dimensionalen Ausgangsvektor der logischen Funktion beliebig, aber vorzugsweise bijektiv.

Eine logische Funktion mit den notwendigen Eigenschaften ist beispielsweise durch einen Addierer gegeben. Gilt $x_i$ kleiner als $x_{i+1}$, dann kann die logische Funktion beispielsweise auch zu einem sogenannten Prioritätscodierer implementiert werden. Aufgrund der Redundanz im Ausgangsvektor der Schwellwertgatter ist eine Reihe weiterer logischer Funktionen möglich. Wählt man beispielsweise für die Ausgangsbits $y_0,...,y_{n-1}$ folgende Funktion:

$$y_{n-i} = \bigoplus_{q=2^{(i-1)} \pm ... \pm 2^{(i-1)} -1} \hat{x}_q, \quad i = 1,...,n \qquad (2)$$

dann ergibt sich ebenfalls eine geeignete eindeutige Funktion. Hierbei bezeichnet $\oplus$ die Addition modulo 2 und $\hat{x}_q$ den binären Ausgang des Schwellwertgatters mit dem Schwellenwert $x_1$.

Für n = 3 gilt dann beispielsweise:

$$y_2 = \hat{x}_3 \quad y_1 = \hat{x}_5 \oplus \hat{x}_1 \quad y_0 = \hat{x}_6 \oplus \hat{x}_4 \oplus \hat{x}_2 \oplus \hat{x}_0 \qquad (3)$$

Diese Funktion entspricht der in Fig. 3 gezeigten Wahrheitstabelle.

Es sei darauf hingewiesen, daß für die Güte der Gleichverteilung der Zufallszahlen die geeignete Wahl der Schwellwertwerte $x_i$ bedeutsam ist. Ist die Dichtefunktion p(x) von Fig. 2a des stochastischen Signals zeitkonstant und von vorneherein hinreichend genau bekannt, können diese Werte a priori ausgerechnet und eingestellt werden. Ist jedoch die Dichtefunktion p unbekannt oder ändert sie sich mit der Zeit, wird es bevorzugt, die Schwellenwerte nachzuführen, d.h. zu adaptieren. Eine Adaption der Schwellenwerte ist auch dann sinnvoll, wenn Implementierungsungenauigkeiten, beispielsweise des Analog/Digital-Wandlers auszugleichen sind. Wie es nachfolgend dargelegt wird, ist auch dann, wenn die Wahrscheinlichkeitsdichtefunktion p(x) zwar zeitkonstant ist, jedoch a priori nicht bekannt ist, eine automatische Ermittlung der optimalen Rauschsignal-Schwellwerte möglich. In diesem Fall muß die Einrichtung 5 zum Berechnen der Rauschsignal-Schwellenwerte auch bei unbekannter, jedoch zeitkonstanter Wahrscheinlichkeitsdichteverteilung die Rauschsignal-Schwellenwerte zunächst ermitteln, um dann nach einer Anzahl von Trainings-Durchläufen optimal eingestellte Schwellenwerte bereitstellen zu können.

Die a priori Auswahl der Schwellenwerte $x_i$ findet bei einer analytisch oder numerisch bekannten Verteilungsfunktion, welche beispielsweise durch Messung erhalten worden ist, folgendermaßen statt. Sei F eine gegebene Verteilungsfunktion der Zufallsvariable Y mit stetiger Dichtefunktion p, so gilt folgender Zusammenhang:

$$F : \mathbb{R} \to [0,1], \quad F(x) := \int_{-\infty}^{x} p(y)dy \qquad (4)$$

In diesem Fall sind die Unterteilungspunkte für eine Gleichverteilung auf $\{0,...,2^{n-1}\}$ wählen:

$$x_i := F^{-1}\left(\frac{i}{2^n}\right), \quad i \in \{0,...,2^n\} . \qquad (5)$$

Definiert man eine neue Zufallsvariable $\tilde{Y}$ wie oben beschrieben, so ist diese auf $\{0,...2^{n-1}\}$ gleichverteilt.

Im nachfolgenden wird anhand der Figuren 4, 5, 6 und 7 auf verschiedene Möglichkeiten der adaptiven Einstellung der Rauschsignal-Schwellenwerte der Einrichtung 3 zum Ausgeben der Zufallszahlen mit zumindest zwei Stellen eingegangen.

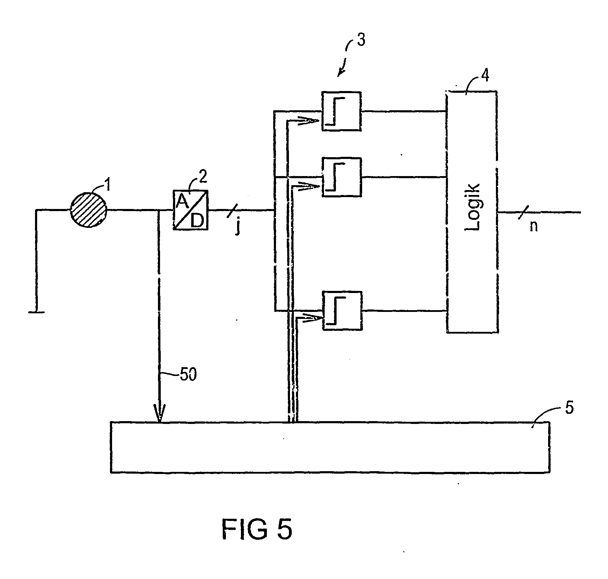

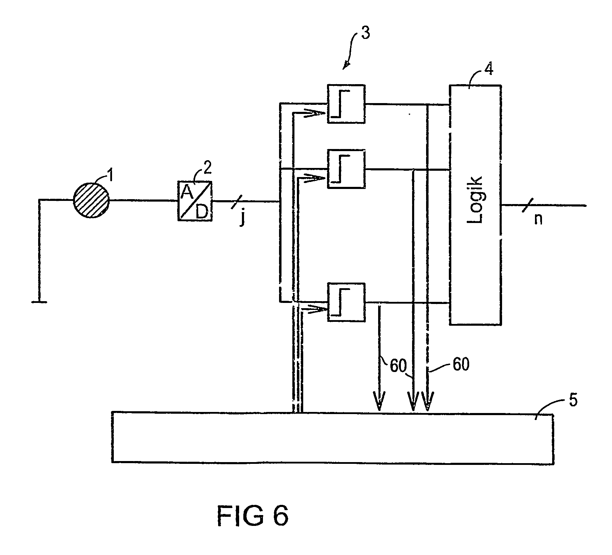

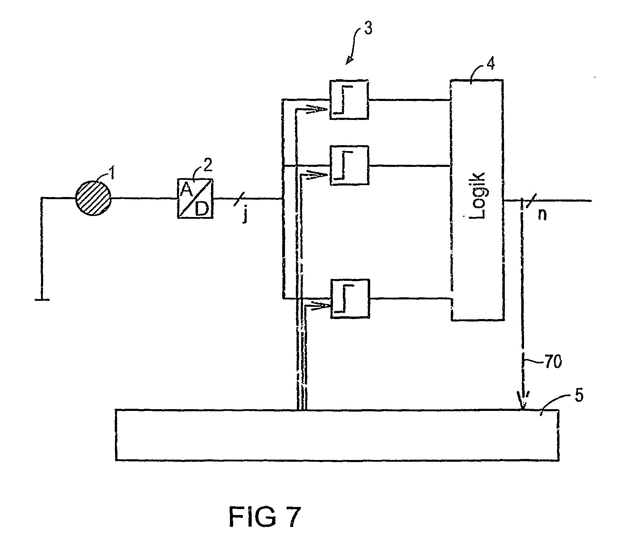

Bei dem in Fig. 4 gezeigten Ausführungsbeispiel werden zum Nachführen der Rauschsignal-Schwellenwerte diskretisierte Ausgangswerte des A/D-Wandlers ausgewertet, wie es durch einen Pfeil 40 dargestellt ist. Alternativ können auch, wie es in Fig. 5 dargestellt ist, direkt die Rauschsignal-Werte am Ausgang der Rauschquelle betrachtet und ausgewertet werden, wie es durch einen Pfeil 50 dargestellt ist. Alternativ können auch die Zufallszahlen am Ausgang der Einrichtung 3 verwendet werden, wie es durch Zeile 60 in Fig. 6 dargestellt ist. Alternativ können auch die codierten Zufallszahlen am Ausgang der Logikeinrichtung 4 betrachtet werden, wie es in Fig. 7 durch einen Pfeil 70 dargestellt ist. Alternativ können auch beliebige Kombinationen der in den Figuren 4, 5, 6 und 7 dargestellten Möglichkeiten eingesetzt werden. Hierzu werden entweder mehrere beobachtete Werte in die Einrichtung 5 zum Bereitstellen der Rauschsignal-Schwellenwerte eingelesen und verarbeitet. Alternativ kann auch eine Nachführung der Rauschsignal-Schwellenwerte erreicht werden, wenn nur ein aktuell beobachteter Wert eingelesen und verarbeitet wird. Die Einrichtung 5 bildet dann eine Schätzung für die optimalen Schwellenwerte $x_i$ und gibt diese, wie es aus den Figuren ersichtlich ist, an die Schwellwertgatter weiter.

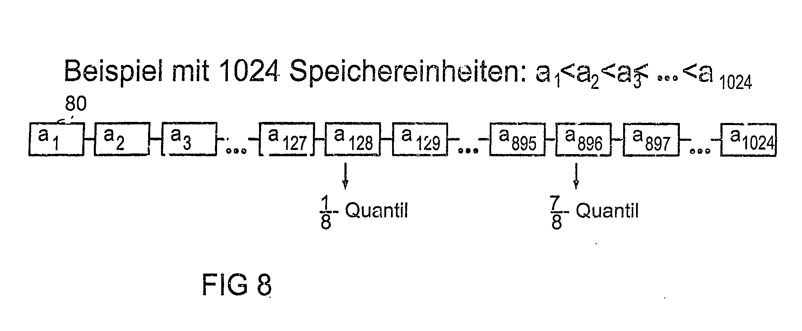

Eine Möglichkeit zur Approximation der $i/(2^n)$-Quantile, d.h. der Rauschsignal-Schwellenwerte, der Verteilung ergibt sich durch Ermittlung der statistischen $i/(2^n)$-Quantile der Messungen. Dies kann beispielsweise dadurch geschehen, daß, wie es anhand von Fig. 8 ersichtlich ist, die Rauschdaten in aufsteigender Reihenfolge sortiert gespeichert werden. Anschließend kann durch Abzählen das entsprechende Quantil gefunden werden. Fig. 8 zeigt beispielsweise 1024 Speichereinheiten 80, die in aufsteigender Reihenfolge angeordnet sind. Zur Anwendung des in Fig. 8 gezeigten Konzepts müssen zunächst 1024 Rauschsignal-Abtastwerte, Zufallszahlen etc. erfaßt werden und in die 1024 Speichereinheiten nach ihrer Größe einsortiert werden, und zwar in aufsteigender Reihenfolge. Wenn die 1024 Speichereinheiten belegt sind, steht beispielsweise in der Speicherzelle $a_{128}$ das 1/8-Quantil, d.h. der Rauschsignal-Schwellenwert x von Fig. 2b, während in der Speicherzelle $a_{896}$ das 7/8-Quantil steht, also der Rauschsignal-Schwellenwert $x_7$ von Fig. 2b. Ein Vorteil des in Fig. 8 gezeigten Konzepts besteht darin, daß es dann, wenn die 1024 Speichereinheiten erst einmal gefüllt sind, zu einer unmittelbaren Nachführung verwendet werden kann. Werden 1024 Rauschsignalwerte erfaßt und einsortiert, und wird dann der 1025ste Wert erhalten, so muß dieser in eine Speichereinheit 80 einsortiert werden, so daß eine nächstniedrigere Speichereinheit einen kleineren Wert hat und eine nächsthöhere Speichereinheit einen größeren Wert hat. Dazu wird der als erstes eingefügte Wert, also der älteste Wert, aussortiert und die Speicherelementesequenz unter Verwendung des neuen Werts umsortiert.

Landet nun in einer Speichereinheit, die ein Quantil bestimmt, ein anderer Wert als vorher, so wird der entsprechende Rauschsignal-Schwellenwert in dem entsprechenden Schwellwertgatter der Einrichtung 3 auf den neu einsortierten Wert verändert. Wesentlich an dem in dem Fig. 8 beschriebenen Konzept ist, daß ein schneller Einsortieralgorithmus verwendet wird.

Nachfolgend wird als alternative Option ein adaptives Verfahren vorgestellt, bei dem eine Schätzung für die Schwellenwerte durch Beobachtung der erzeugten Zufallszahlen erhalten wird. Dazu sei ein Intervall (a, b) gegeben, für welches ein beliebiges, dann jedoch festes $\gamma$-Quantil aus der Menge [0,1] zu bestimmen ist. X(l) aus der Menge [a, b] bezeichnet den im l-ten Schritt gefundenen Schwellenwert, und $R_c(l)$ bezeichnet eine Menge von Realisierungen des Zufallsprozesses der Mächtigkeit c, wobei c eine natürliche Zahl ist:

Die beiden folgenden Gleichungen geben die Anzahl der Elemente aus $R_c(l)$ an, die größer bzw. kleiner als der Schwellenwert x(1) sind:

$$A(l) := |\{i \in R_c(l) \,|\, i \leq x(l)\}| \quad \text{und}$$
$$B(l) := |\{i \in R_c(l) \,|\, i > x(l)\}| \tag{6}$$

Der Algorithmus hat folgenden Verlauf, wobei c fest gewählt ist:

```
1: Wähle x(1) ∈ [a, b] beliebig
2: Wähle α ∈ R, α > 0 beliebig
3: 1 ← 0
4: wiederhole
5: l ← l + 1
6: R_c (l) ← c Realisierungen des Zufallsprozesses
7: A(l) ← |{i ∈ R_c(l)|i ≤ x(l)}|
8: B(l) ← |{i ∈ R_c(l)|i > x(l)}
9: x(l+1) ← x(l) + (γ B(l) - (1 - γ)A(l))/β(l)
10: bis Adaption hinreichend gut
```

Der Faktor $\beta(l)$ kann zur Beschleunigung der Konvergenz gewählt werden. Sind die $R_c(l)$ unabhängig und $\beta$(1) = 1, so läßt sich die Konvergenz gegen das $\gamma$-Quantil mit Wahrscheinlichkeit 1 mathematisch nachweisen. Die Abbruchbedingung in Zeile 10 kann z. B. durch mehrfachen Vergleich von A(1) und B(1) realisiert werden oder durch eine feste Anzahl von Iterationszyklen ersetzt werden. Der Algorithmus läßt sich für alle benötigten Quantile (z. B. $\gamma = i/2^n$, i = 1, ...,$2^n$-1) simultan verwenden.

Nach einer festen Anzahl von Iterationszyklen empfiehlt es sich ferner, die Schrittvariable 1 wieder auf einen kleineren Wert zurückzusetzen, damit wieder eine neue Korrektur bzw. Adaption stattfindet. Wie es bereits ausgeführt worden ist, läßt sich der Algorithmus für alle benötigten Quantile (beispielsweise $y = i/2^n$, i = 1, ..., $2^{n-1}$) simultan verwenden.

Der beschriebene Algorithmus führt ferner auch bei unbekannter Wahrscheinlichkeitsdichteverteilung p(x) zu einer automatischen Einstellung der Rauschsignal-Schwellenwerte.

Dies gilt ferner auch für das in Fig. 8 beschriebene Konzept, wobei auch hier nach einer bestimmten Trainings-Phase, in der Zufallszahlen nicht ausgegeben werden sollten, die Rauschsignal-Schwellenwerte wie benötigt automatisch eingestellt worden sind.

Bei einer Aktivierung des Algorithmus während der Erzeugung der Zufallszahlen ist der Fall c = 1 und im Hinblick auf eine Implementierung besonders günstig.

1: $l \leftarrow l + 1$
2: i ← eine Realisierung des Zufallsprozesses
3: falls i > x (l) dann
4: $x(1+1) \leftarrow x(1) + \gamma/\beta(1)$ (Inkrementieren)
5: sonst
6: $x(1+1) \leftarrow x(1) - (1-\gamma)/\beta(1)$ (Dekrementieren)
7: end falls

Im letzteren Szenario ist der Fall $\beta(1) = 2^{j-r}$, wobei r eine natürliche Zahl oder 0 ist und $2^j$ Quantisierungsstufen im A/D-Wandler des Abtasters gegeben sind, im Hinblick auf eine Implementierung besonders interessant.

Betrachtet man beispielsweise das 1/4-Quantil, so lautet die Schleife des Algorithmus folgendermaßen:

1: $l \leftarrow l + 1$
2: i ← eine Realisierung des Zufallsprozesses
3: falls i > x(l) dann
4 : $x(l+1) \leftarrow x(l) + 2^{r-j-2}$ (Inkrementieren)
5: sonst
6: $x(l+1) \leftarrow x(l) - 3 \cdot 2^{r-j-2}$ (Dekrementieren)
7: end falls

Betrachtet man weiter das 1/2-Quantil, so lautet der Algorithmus:

1: $l \leftarrow l + 1$
2: i ← eine Realisierung des Zufallsprozesses
3: falls i > x(l) dann
4: $x(1+1) \leftarrow x(l) + 2^{r-j-1}$ (Inkrementieren)
5: sonst
6: $x(1+1) \leftarrow x(l) - 2^{r-j-1}$ (Dekrementieren)
7: end falls

Betrachtet man schließlich das 3/4-Quantil, so lautet die Schleife im Algorithmus:

1: $l \leftarrow l + 1$
2: i ← eine Realisierung des Zufallsprozesses
3: falls i > x(l) dann
4: $x(1+1) \leftarrow x(1) + 3 \cdot 2^{r-j-2}$ (Inkrementieren)
5: sonst
6: $x(1+1) \leftarrow x (1) - 2^{r-j-2}$ (Dekrementieren)
7: end falls

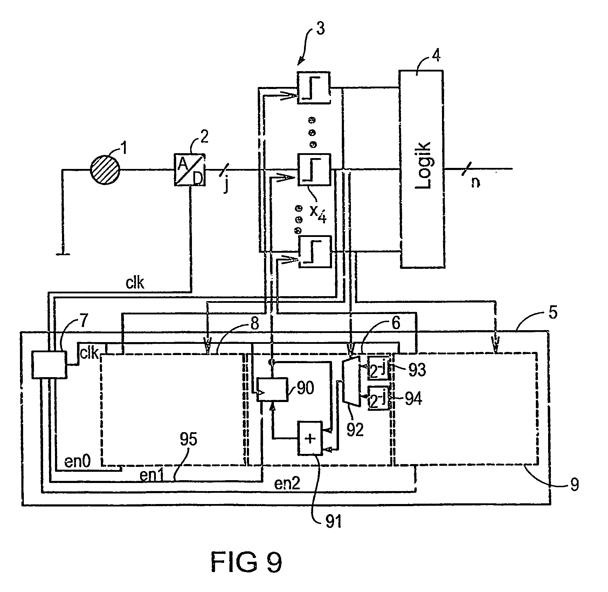

Im nachfolgenden wird auf Fig. 9 Bezug genommen, um eine schaltungsmäßige Implementation des vereinfachten Algorithmus beispielhaft für das mittlere Quantil, d. h. das 1/2-Quantil $x_4$ aus Fig. 2b, und den Fall n = 2, r = 1 zu erläutern. Die Einrichtung zum Bereitstellen des Rauschsignal-Schwellenwerts $x_4$ umfaßt ein Register 90, einen Addierer 91, ein Rechenwerk 92 sowie zwei Eingänge 93 und 94, von denen der eine den Wert $+2^{-j}$ zum Addierer 92 liefert, während der andere den Wert "$-2^{-j}$" zu dem Addierer 92 liefert. Der gesamte Schaltungsblock für den mittleren Rauschsignal-Schwellenwert $x_4$ ist in Fig. 9 mit dem Bezugszeichen 6 bezeichnet. Insbesondere wird der aktuell verwendete Schwellenwert in dem Register 90 gehalten und je nach Zustand der aktuellen Schwellwartentscheidung inkrementiert oder dekrementiert. Der gesamte Block 6 wird durch eine Enable-Leitung "enl" 95 durch eine Kontrollogik 7 dann aktiviert, wenn der entsprechende Schwellenwert $x_4$ adaptiert werden soll. Dieselben Blöcke 8, 9 existieren in analoger Ausführung für die beiden anderen Schwellenwerte. Für deren Aktivierung ist jedoch Voraussetzung, daß sich der aktuelle Rauschwert in dem Intervall $]-\infty,x_1[$ bzw. $]x_1,+\infty[$ befindet. Aus diesem Grund wird der Kontrollogik zusätzlich noch das Ausgangssignal des Schwellwertgatters mit dem Schwellenwert $x_4$ zugeführt, wie es aus der Fig. 9 ersichtlich ist. Es sei darauf hingewiesen, daß andere Quantile als das mittlere Quantil durch Verwenden des jeweiligen prozentualen $\gamma$-Werts in Zeile 3 des obigen Algorithmus ebenfalls ermittelt werden können.

Es sei darauf hingewiesen, daß beliebige Alternativen zum Überwachen der Statistik der entsprechenden Zufallszahlen und zum Nachstellen der entsprechenden Rauschsignal-schwellenwerte implementierbar sind.

Das in Fig. 9 bezeichnete Ausführungsbeispiel führt eine Adaption pro neu erfaßtem Wert durch, die schaltungstechnisch günstig zu realisieren ist. Dies ist der Fall, da das Rechenwerk 92 lediglich als einfacher Komparator auszuführen ist, um die Zeile 3 des letztgenannten Algorithmus zu implementieren, und um dann eine Inkrementierung bzw. Dekrementierung vorzugsweise nach einer Gewichtung mit einer Iterationsvariablen, welche in Fig. 9 nicht gezeigt ist, durchzuführen. Somit wird aus dem alten Rauschsignal-Schwellenwert $x_4$ unter Verwendung des Addierers 91 der neuen Rauschaignal-Schwellenwert berechnet.

Bezugszeichenliste

| | |
|---|---|
| 1 | Rauschsignalquelle |
| 2 | Abtaster |
| 3 | Einrichtung zum Ausgeben der Zufallszahl |
| 3a | Erster Rauschsignal-Schwellenwert |
| 3b | Zweiter Rauschsignal-Schwellenwert |
| 3c | Siebter Rauschsignal-Schwellenwert |
| 4 | Codierer |
| 5 | Einrichtung zum Bereitstellen von Rauschsignal-Schwellenwerten |
| 6 | Adaptierblock für eine Rauschsignal-Schwellenwert |
| 7 | Steuerlogik |
| 8 | Adaptierblock für einen weiteren Rauschsignal-Schwellenwert |
| 9 | Adaptierblock für noch einen weiteren Rauschsignal-Schwellenwert |
| 31 | Erste Zeile der Wahrheitstabelle des Codierers |
| 32 | Zweite Zeile der Wahrheitstabelle des Codierers |
| 38 | Achte Zeile der Wahrheitstabelle des Codierers |
| 40 | Überwachen der Rauschsignal-Abtastwerte |
| 50 | Überwachen der Rauschsignalwerte vor der Abtastung |
| 60 | Überwachen der Zufallszahlen |
| 70 | Überwachen der codierten Zufallszahlen |
| 80 | Speichereinheiten |
| 90 | Register |
| 91 | Addierer |
| 92 | Rechenwerk |
| 93 | Positiver Inkrementierungswert |
| 94 | Negativer Inkrementierungswert |
| 95 | Freigabeleitung |

**Patentansprüche**

**1.** Vorrichtung zum Erzeugen einer codierten Zufallszahl mit n Stellen mit:

> einer Einrichtung (2) zum Abtasten eines Rauschsignals, um einen Rauschsignal-Abtastwert zu erhalten;
> einer Einrichtung (5) zum Bereitstellen von $(2^n+1)$ Rauschsignal-Schwellenwerten; und
> einer Einrichtung (3) zum Ausgeben einer Zufallszahl mit $(2^n-1)$ Stellen,

wobei das Rauschsignal eine Wahrscheinlichkeitsdichtefunktion hat, die vorbestimmt ist, und die Wahrscheinlichkeit, dass ein Rauschsignal-Abtastwert kleiner oder gleich einem Rauschsignal-Schwellenwert ist, durch folgende Gleichung gegeben ist:

$$F : I\!R \to [0,1], \quad F(x) = \int_{-\infty}^{x} p(y)\,dy \;,$$

wobei p(y) die Wahrscheinlichkeitsdichtefunktion des Rauschsignals und y ein Rauschsignal-Schwellenwert ist, und wobei die Einrichtung (5) zum Bereitstellen ausgebildet ist, um die Rauschsignal-Schwellenwerte gemäß folgender Gleichung festzulegen:

$$x_i = F^{-1}\left(i/2^n\right),$$

wobei $i \in \{0,...,2^n\}$, wobei i eine Laufvariable und $F^{-1}$ die Umkehrfunktion der Funktion F ist, und wobei $x_i$ der gesuchte Rauschsignal-Schwellenwert ist,
**dadurch gekennzeichnet,**
**dass** Rauschen mit einer nicht-normalverteilten Wahrscheinlichkeitsdichtefunktion verwandt wird,
**dass** die Einrichtung (3) zum Ausgeben für $(2^n-1)$ Rauschsignal-Schwellenwerte jeweils ein Schwellenwertgatter $(x_i)$ enthält, wobei durch jedes Schwellenwertgatter eine eigene Stelle der Zufallszahl mit $(2^n-1)$ Stellen bestimmbar ist, wobei der logische Zustand jeder Stelle der Zufallszahl davon abhängt, ob der Rauschsignal-Abtastwert den Schwellenwert, der dem entsprechenden Schwellenwertgatter zugeordnet ist, unter- oder überschreitet, und
**dass** die Vorrichtung ferner einen Codierer (4) aufweist, der dazu ausgebildet ist, aus der von der Einrichtung (3) ausgegebenen Zufallszahl mit $(2^n-1)$ Stellen eine codierte Zufallszahl mit n Stellen zu erzeugen.

**2.** Vorrichtung nach Anspruch 1,
bei der der Codierer (4) eine Tabelle aufweist, durch die eine codierte Zufallszahl eindeutig einer Zufallszahl zugeordnet ist.

**3.** Vorrichtung nach Anspruch 1, bei der der Codierer ausgebildet ist, um folgende logische Gleichung zu implementieren:

$$y_{n-i} = \bigoplus_{q=2^{(n-1)}\pm...\pm2^{(n-i)}-1} \hat{x}_q, \qquad i = 1,...,n \qquad\qquad (2)$$

wobei $\hat{x}_q$ eine Stelle der Zufallszahl mit einem Index q ist,
wobei $y_{n-i}$ eine Stelle der codierten Zufallszahl mit einem Index (n-i) ist;
wobei n die Anzahl der Stellen der codierten Zufallszahl ist,
wobei i eine Laufvariable ist, die von 1 bis n läuft, und
wobei $\oplus$ eine Modulo-2-Addition der Stellen $x_q$ ist, die durch folgende Gleichung berechnet werden:

$$q = 2^{(n-1)} \pm ... \pm 2^{(n-i)} - 1.$$

**4.** Vorrichtung nach Anspruch 1, die ferner eine Einrichtung zum Adaptieren der Rauschsignal-Schwellenwerte aufweist, um Umgebungsschwankungen der Vorrichtung oder einer Rauschsignalquelle zu kompensieren.

**5.** Verfahren zum Erzeugen einer codierten Zufallszahl mit n Stellen mit folgenden Schritten:

Abtasten (2) eines Rauschsignals, um einen Rauschsignal-Abtastwert zu erhalten;
Bereitstellen (5) von $(2^n+1)$ Rauschsignal-Schwellenwerten; und
Ausgeben (3) einer Zufallszahl mit $(2^n-1)$ Stellen,

wobei das Rauschsignal eine Wahrscheinlichkeitsdichtefunktion hat, die vorbestimmt ist, und die Wahrscheinlichkeit, dass ein Rauschsignal-Abtastwert kleiner oder gleich einem Rauschsignal-Schwellenwert ist, durch folgende Gleichung gegeben ist:

$$F : IR \to [0,1], \quad F(x) = \int_{-\infty}^{x} p(y)\,dy,$$

wobei $p(y)$ die Wahrscheinlichkeitsdichtefunktion des Rauschsignals und y ein Rauschsignal-Schwellenwert ist, und wobei im Schritt des Bereitstellens (5) die Rauschsignal-Schwellenwerte gemäß folgender Gleichung festgelegt werden:

$$x_t = F^{-1}(i/2^n),$$

wobei $i \in \{0,...2^n\}$, wobei i eine Laufvariable und $F^{-1}$ die Umkehrfunktion der Funktion F ist, und wobei $x_i$ der gesuchte Rauschsignal-Schwellenwert ist,

**dadurch gekennzeichnet,**

**dass** Rauschen mit einer nicht-normalverteilten Wahrscheinlichkeitsdichtefunktion verwandt wird,

**dass** im Schritt des Ausgebens (3) für ($2^n$-1) Rauschsignal-Schwellenwerte jeweils ein Schwellenwertgatter ($x_i$) vorgesehen ist, wobei durch jedes Schwellenwertgatter eine eigene Stelle der Zufallszahl mit ($2^n$-1) Stellen bestimmbar ist, wobei der logische Zustand jeder Stelle der Zufallszahl davon abhängt, ob der Rauschsignal-Abtastwert den Schwellenwert, der dem entsprechenden Schwellenwertgatter zugeordnet ist, unter- oder überschreitet, und

**dass** ferner ein Schritt des Codierens (4) ausgeführt wird, in dem aus der durch den Schritt (3) ausgegebenen Zufallszahl mit ($2^n$-1) Stellen eine codierte Zufallszahl mit n Stellen erzeugt wird.

**Claims**

1. Apparatus for generating an encoded random number with n digits, comprising:

   a means (2) for sampling a noise signal so as to obtain a noise signal sample;
   a means (5) for providing ($2^n$+1) noise signal threshold values; and
   a means (3) for outputting a random number with ($2^n$-1) digits,

   wherein the noise signal has a probability-density function which has been predetermined and the probability of a noise signal sample being smaller than or equalling a noise signal threshold value is given by the following equation:

$$F: IR \rightarrow [0,1], \quad F(x) := \int_{-\infty}^{x} p(y)\, dy$$

   wherein $p(y)$ is the probability-density function of the noise signal and y is a noise signal threshold value, and wherein the means (5) for providing is configured to establish the noise signal threshold values in accordance with the following equation:

$$x_i := F^{-1}(i/2^n)$$

   wherein $i \in \{0,...,2^n\}$, wherein i is a control variable,
   wherein $F^{-1}$ is the inverse function of the function F, and
   wherein $x_i$ is the noise signal threshold value sought,
   **characterized in that**
   noise with a non-normally distributed probability-density function is used,
   the means (3) for outputting contains a threshold-value gate ($x_1$) for ($2^n$-1) noise signal threshold values, respectively, a specific digit of the random number with ($2^n$-1) digits being determinable by each threshold-value gate, the logical state of each digit of the random number depending on whether the noise signal sample falls below or exceeds the threshold value associated with the respective threshold-value gate, and
   the device further comprises an encoder (4) configured to generate an encoded random number with n digits from the random number with ($2^n$-1) digits output by means (3).

2. Apparatus as claimed in claim 1,

wherein the encoder comprises a table by means of which an encoded random number is uniquely associated with a random number

3. Apparatus as claimed in claim 1, wherein the encoder is configured to implement the following logical equation:

$$y_{n-i} = \underset{q=2^{(n-1)}\pm...\pm2^{(n-i)}-1}{\oplus} \hat{x}_{q'} \cdot \quad i = 1,...,n \qquad (2)$$

wherein $\hat{x}_q$ is a digit of the random number with an index q,
wherein $y_{n-i}$ is a digit of the encoded random number with an index (n-i);
wherein n is the number of digits of the encoded random number;
wherein i is a control variable running from 1 to n, and
wherein $\oplus$ is a modulo-2 addition of the digits $x_q$ which are calculated by the following equation:

$$q = 2^{(n-1)}\pm...\pm2^{(n-i)}-1.$$

4. Apparatus as claimed in claim 1, further comprising a means for adapting the noise signal threshold values to compensate environmental variations of the apparatus or a noise signal source.

5. Method for generating an encoded random number with n digits, comprising:

sampling (2) a noise signal so as to obtain a noise signal sample;
providing (5) ($2^n+1$) noise signal threshold values; and
outputting (3) a random number with ($2^n-1$) digits,

wherein the noise signal has a probability-density function which has been predetermined, wherein the probability of a noise signal sample being smaller than or equaling a noise signal threshold value is given by the following equation:

$$F: I\!R \rightarrow [0,1], \quad F(x) := \int_{-\infty}^{x} p(y)\,dy \cdot$$

wherein p(y) is the probability-density function of the noise signal and y is a noise signal threshold value, and wherein, in the step of providing (5), the noise signal threshold values are established in accordance with the following equation:

$$x_i := F^{-1}(i/2^n)$$

wherein $i \in \{0,...2^n\}$, wherein i is a control variable, wherein $F^{-1}$ is the inverse function of the function F, and wherein $x_i$ is the noise signal threshold value sought,
**characterized in that**
noise with a non-normally distributed probability-density function is used,
in the step outputting (3), a threshold-value gate ($x_1$) is provided for ($2^n-1$) noise signal threshold values, respectively, a specific digit of the random number with ($2^n-1$) digits being determinable by each threshold-value gate, the logical state of each digit of the random number depending on whether the noise signal sample falls below or exceeds the threshold value associated with the respective threshold-value gate, and
further a step of encoding (4) is performed, in which an encoded random number with n digits is generated from the random number with ($2^n-1$) digits output by step (3).

EP 1 504 336 B1

**Revendications**

1. Dispositif pour générer un nombre aléatoire codé à n positions, avec:

   un moyen (2) destiné à balayer un signal de bruit, pour obtenir une valeur de balayage de signal de bruit;
   un moyen (5) destiné à préparer ($2^n+1$) valeurs de seuil de signal de bruit; et
   un moyen (3) destiné à sortir un nombre aléatoire à ($2^n-1$) positions,
   le signal de bruit ayant une fonction de densité de probabilité qui est prédéterminée, et la probabilité qu'une valeur de balayage de signal de bruit soit inférieure ou égale à une valeur de seuil de signal de bruit étant donnée par l'équation suivante:

$$F : IR \rightarrow [0, 1], \quad F(x) = \int_{-\infty}^{x} p(y)dy \,,$$

   $p(y)$ étant la fonction de densité de probabilité du signal de bruit et $y$ étant une valeur de balayage de signal de bruit, et
   le moyen (5) destiné à préparer étant réalisé de manière à établir les valeurs de seuil de signal de bruit selon l'équation suivante:

$$x_i = F^{-1}(i/2^n)$$

   $i \in \{0, ..., 2^n\}$, étant une variable de passage et $F^{-1}$ étant la fonction d'inversion de la fonction F, et $x_i$ étant la valeur de seuil de signal de bruit recherchée,

   **caractérisé par le fait**
   **qu'**il est utilisé des bruits avec une fonction de densité de probabilité distribuée non normalement,
   **que** le moyen (3) destiné à sortir contient une porte de valeur de seuil ($x_i$) pour chaque fois ($2^n-1$) valeurs de seuil de signal de bruit, par chaque porte de valeur de seuil pouvant être déterminée une position propre du nombre aléatoire à ($2^n-1$) positions, l'état logique de chaque position du nombre aléatoire étant fonction du fait que la valeur de seuil de signal de bruit descend au-dessous ou excède la valeur de seuil associée à la porte de valeur de seuil correspondante, et
   **que** le dispositif présente, par ailleurs, un codeur (4) qui est réalisé de manière à générer, à partir du nombre aléatoire à ($2^n-1$) positions sorti par le moyen (3), un nombre aléatoire codé à n positions.

2. Dispositif selon la revendication 1,
   dans lequel le codeur (4) présente un tableau par lequel un nombre aléatoire codé est associé de manière univoque à un nombre aléatoire.

3. Dispositif selon la revendication 1, dans lequel le codeur est réalisé de manière à mettre en oeuvre l'équation logique suivante:

$$yi = \bigoplus_{q=2^{(n-1)} \pm \, \pm 2^{(n-i)}-1} \hat{x}_q \,, \qquad i = 1, ..., n \qquad (2)$$

   $\hat{x}_a$ étant une position du nombre aléatoire à indice q,
   $y_{n-1}$ étant une position du nombre aléatoire codé à indice (n-i),
   n étant le nombre de positions du nombre aléatoire codé,
   i étant une variable courante qui va de 1 à n, et
   $\oplus$ étant une addition modulo-2 des positions $x_q$ qui sont calculées par l'équation suivante :

**14**

$$q = 2^{(n-1)} \pm ... \pm 2^{(n-i)} - 1$$

**4.** Dispositif selon la revendication 1, présentant par ailleurs un moyen destiné à adapter les valeurs de seuil de signal de bruit, pour compenser des oscillations d'environnement du dispositif ou d'une source de signal de bruit.

**5.** Procédé pour générer un nombre aléatoire codé à n positions, aux étapes suivantes consistant à:

balayer (2) un signal de bruit, pour obtenir une valeur de balayage de signal de bruit;
préparer (5) ($2^n$+1) valeurs de seuil de signal de bruit; et
sortir (3) un nombre aléatoire à ($2^n$-1) positions,
le signal de bruit ayant une fonction de densité de probabilité qui est prédéterminée et la probabilité qu'une valeur de balayage de signal de bruit soit inférieure ou égale à une valeur de seuil de signal de bruit étant donnée par l'équation suivante:

$$F : IR \rightarrow [0, 1], \quad F(x) = \int^{x} p(y)dy$$

$p(y)$ étant la fonction de densité de probabilité du signal de bruit et $y$ étant une valeur de balayage de signal de bruit, et
les valeurs de seuil de signal de bruit étant établies, à l'état de préparation (5), selon l'équation suivante:

$$x_i = F^{-1}(i / 2^n)$$

$i \in \{0, ..., 2^n\}$, étant une variable courante et $F^{-1}$ étant la fonction d'inversion de la fonction F, et $x_i$ étant la valeur de seuil de signal de bruit recherchée,

**caractérisé par le fait**
**qu'**il est utilisé des bruits avec une fonction de densité de probabilité distribuée non normalement,
**qu'**il est prévu, à l'étape de sortie (3), une porte de valeur de seuil ($x_i$) pour chaque fois ($2^n$-1) valeurs de seuil de signal de bruit, par chaque porte de valeur de seuil pouvant être déterminée une position propre du nombre aléatoire à ($2^n$-1) positions, l'état logique de chaque position du nombre aléatoire étant fonction du fait que la valeur de seuil de signal de bruit descend au-dessous ou excède la valeur de seuil associée à la porte de valeur de seuil correspondante, et
**qu'**il est, par ailleurs, effectué une étape de codage (4) dans laquelle est généré, à partir du nombre aléatoire à ($2^n$-1) positions sorti par l'étape (3), un nombre aléatoire codé à n positions.

1

Rauschsignal-
quelle

2

Abtaster

3

5

Einrichtung zum
Bereitstellen
von
Rauschsignal-
Schwellenwerten

Einrichtung
zum
Ausgeben der
Zufallszahl

≥2

Zufallszahl

FIG 1

FIG 2a

FIG 2b

$$A_1 = A_2 = A_3 = \ldots = A_8$$

| $\hat{x}_7$ | $\hat{x}_6$ | $\hat{x}_5$ | $\hat{x}_4$ | $\hat{x}_3$ | $\hat{x}_2$ | $\hat{x}_1$ | $Y_2$ | $Y_1$ | $Y_0$ |
|---|---|---|---|---|---|---|---|---|---|
| 0 | 0 | 0 | 0 | 0 | 0 | 0 | 0 | 0 | 0 |
| 0 | 0 | 0 | 0 | 0 | 0 | 1 | 0 | 0 | 1 |
| 0 | 0 | 0 | 0 | 0 | 1 | 1 | 0 | 1 | 1 |
| 0 | 0 | 0 | 0 | 1 | 1 | 1 | 0 | 1 | 0 |
| 0 | 0 | 0 | 1 | 1 | 1 | 1 | 1 | 1 | 0 |
| 0 | 0 | 1 | 1 | 1 | 1 | 1 | 1 | 1 | 1 |
| 0 | 1 | 1 | 1 | 1 | 1 | 1 | 1 | 0 | 1 |
| 1 | 1 | 1 | 1 | 1 | 1 | 1 | 1 | 0 | 0 |

FIG 3

EP 1 504 336 B1

FIG 4

FIG 5

FIG 6

FIG 7

Beispiel mit 1024 Speichereinheiten: $a_1 < a_2 < a_3 < \ldots < a_{1024}$

FIG 8

FIG 9

## IN DER BESCHREIBUNG AUFGEFÜHRTE DOKUMENTE

**In der Beschreibung aufgeführte Patentdokumente**

- EP 0903665 A2
- US 4853884 A
- EP 1197846 A2


**In der Beschreibung aufgeführte Nicht-Patentliteratur**

- High Quality Physical Random Number Generator. *Markus Dichtl und Norbert Janssen, Proceedings of Eurosmart Security Conference,* Juli 2000, 279-287